# EUROPEAN PATENT SPECIFICATION

(11) **EP 0 273 458 B1**
(45) Date of publication and mention of the grant of the patent: **10.03.1993**
(21) Application number: 87119394.2
(22) Date of filing: 30.12.1987
(51) Int. Cl.: C07C 279/28, C07D 251/54, C07D 251/70, C07F 9/90, C07F 9/94, C08K 5/59, C08K 3/16

(54) **New complexes of bismuth or antimony halides with amines, suitable as flame retardants for polymers, and polymer compositions containing same**
Komplexe von Wismut- oder Antimonhalogeniden mit Aminen nützlich als Flammenverzögerer für Polymere, und diese enthaltende Polymer-Zusammensetzungen
Complexes d'halogénures de bismuth ou d'antimoine avec des amines, utiles comme retardateurs de flammes pour polymères et compositions polymères les contenant

(30) Priority: 30.12.1986 IT 2288786; 30.12.1986 IT 2288886
(43) Date of publication of application: 06.07.1988
(73) Proprietor: Himont Incorporated, Wilmington Delaware 19850-5439 (US)
(72) Inventor: Bertelli, Guido, I-44100 Ferrara (IT); Busi, Patrizia, I-44015 Portomaggiore Ferrara (IT); Locatelli, Renato, I-44100 Ferrara (IT)
(74) Representative: Zumstein, Fritz, Dr.

(56) References cited:
- US-A- 3 705 128
- US-A- 4 028 333
- US-A- 4 203 882
- POLYHEDRON, vol. 1 (7/8), 1982, pages 655-658; & CHEMICAL ABSTRACTS, vol. 98, 1983, page 713, abstract no. 118492p, Columbus, Ohio, US; A. GIUSTI et al.: "Antimony(III) and bismuth(III) trihalide complexes of 2-aminobenzothiazole"

## Description

The present invention refers to new complexes of Bi and Sb halides suitable as flame retardants of thermoplastic polymers and to the polymer compositions containing said retardants.

Compositions suitable for imparting flame-resistance to polymers are known in the art, which comprise thermally unstable halogenated organic compounds and metal compounds, in particular compounds of antimony and/or bismuth.

The extinguishing action in this case is attributed to the metal halide which is formed during the combustion.

In other cases the metal halide is already present in the self-extinguishing composition, for instance in the form of double salts of ammonium and metals.

However it is known that ammonium salts cannot be employed as additives in polymers, due to their high corrosivity and the excessive sensitivity to water and heat.

In place of the ammonium salts, it is known to use organic compounds containing nitrogen, as melamine and melamine bromohydrate, which, besides allowing to overcome the above mentioned drawbacks of the double salts, form, during the combustion, carbonaceous residues capable of arresting the flame. A solution of this kind is described in US Patent No. 4,028,333 in which there are described compositions containing hydrochlorides or hydrobromides of substituted s-triazines in mixture with Sb and/or Bi oxides or halides

On the other hand, from Polyhedron, 1982, vol.1 (7/8), pages 655-658, complexes of 2-aminobenzothiazole with Sb and Bi trihalides are known and from US-A-3,705,128 flame-retardant complexes of Sb halides with amides are also known.

The applicant has now surprisingly found that superior flame self-extinguishing properties can be conferred to the thermoplastic polymers by adding same with exceptionally low amounts of new compounds having the structure of complexes or adducts of antimony or bismuth halides with amines.

The complexes of the present invention are represented by the formula:

(I) R.(MeX₃)y

where R is an amine selected from the group consisting of dicyandiamide, guanamine, 2-guanidinobenzoimidazole, melamine, isophorondiamine, piperazine, all of which may be optionally substituted with an alkyl, aryl or acyl group, or R is an amine selected from compounds containing from 2 to 9 triazino-rings, condensed or linked to each other through at least one or more -NH- groups;
Me is bismuth or antimony
X is chlorine or bromine
y is a number comprised from 0.3 to 4,

In the above complexes up to 3 moles of amine can be bound to 1 mole of the metal halide. The amine can be the same or different.

Representative examples of compounds R containing triazino rings are the compounds normally obtainable by pyrolysis of melamine, known as "melam", "melem" and "melon" for which generally the following formulae are proposed: (see "Proceedings of the Second European Symposium on Thermal Analysis, University of Aberdeen, U.K., 1-4 September 1981, Editor David Dollimore)

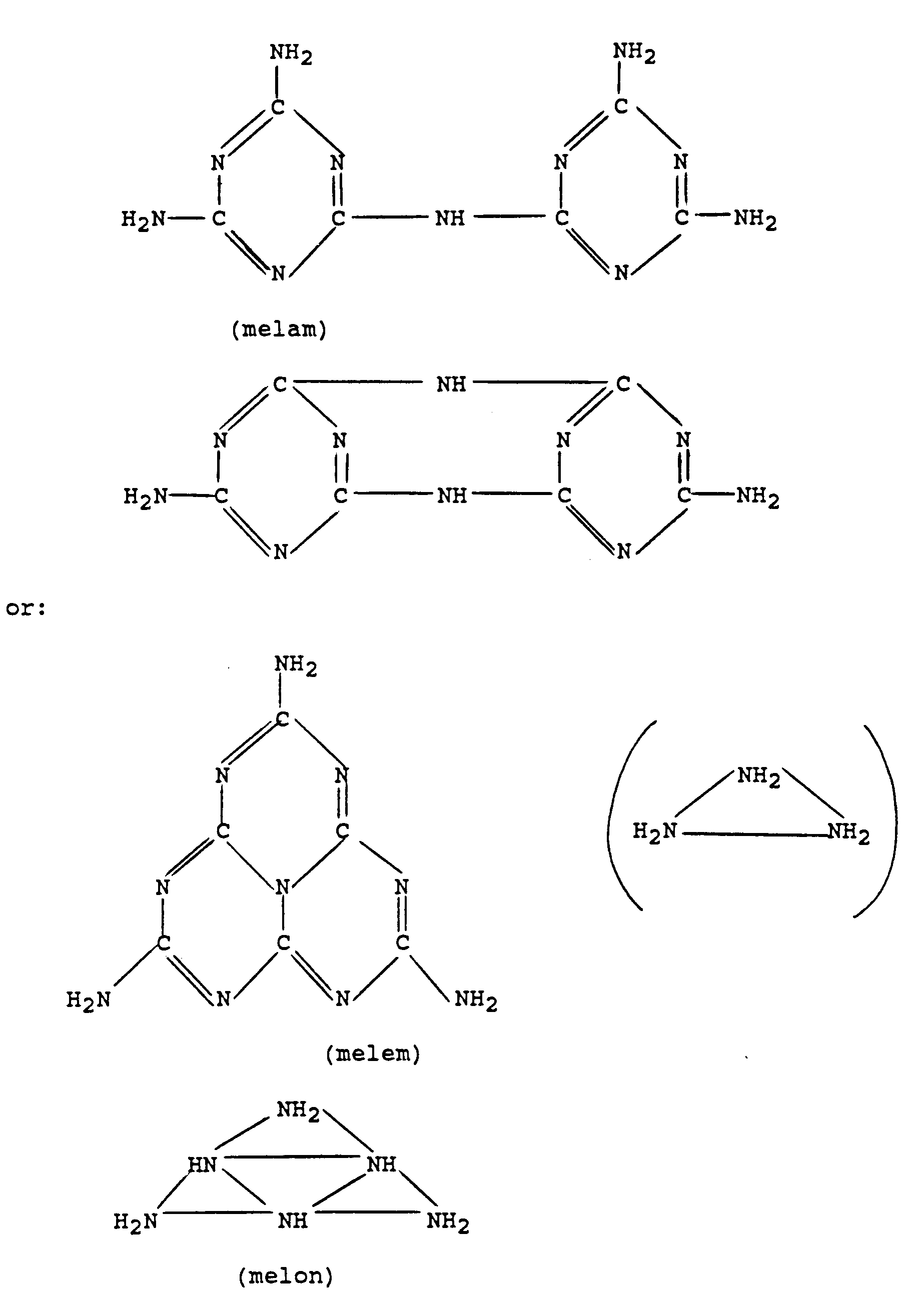

The complexes can be prepared by heating at temperatures between 50 and 150°C a mixture of the amine R with the metal halide, using at least 0.3 mole of metal halide per mole of amine or per mole of primary amino groups when present in the amino compound.

When dicyandiamide is used, a melting of the mixture of the amine and the metal halide occurs already at about 50°C until, increasing the temperature up to 130° -150°C, the mixture hardens and the reaction can be considered completed.

According to another method, a solution of the metal halide (for example a solution in an alcohol or a ketone) is gradually added, while stirring, to a solution or suspension of the amine in a chemically inert liquid solvent or suspending agent, for example a hydrocarbon (hexane, heptane) at a temperature between 0°C and 100°C, and then recovering the product, for example by filtration or removal of the solvent. If the amine present in the complex is dicyandiamide or a triazine, the cyclisation of dicyandiamide to triazino-rings and/or the polycondensation of the triazine up to the desired degree of the triazino rings can be obtained by heating the complex at temperatures in the range from 100°C to 300°C or more.

It is therefore possible, starting from dicyandiamide or melamine to first prepare the complex with the metal halide and then heat-treating said complex to obtain the cyclization of dicyandiamide to triazino-ring and/or the condensation of the triazino-rings through -NH- bridging groups or through a direct condensation of the rings.

According to this method complexes with amines of different nature can therefore be obtained in a single preparation.

When the amine R contains primary amino groups, from the elemental analysis, the X-ray diffraction sprectra and the I.R. analysis, it is possible to show that the metal halide is bound to one or more of said -NH₂ groups.

As indicated, the new complexes are suitable as flame retardants of thermoplastic polymers.

Another aspect of the present invention is therefore represented by the polymer compositions endowed with flame self-exinguishing properties containing said complexes.

The compositions comprise (by weight):
a) 85 - 99.7% of a thermoplastic polymer;
b) 0.3 - 15% of a complex or a mixture of complexes having the above described formula (I);
c) 0 - 1% of a promoter of free radicals.

Preferably, the amount of component (b) is comprised between 0.3 and 10% by weight and, more preferably, between 0.3 and 3% with the proviso that, when (c) is not present, component (b) is at least in the amount of 3% by weight.

Examples of thermoplastic polymers which can be used with the flame retardants of the present invention comprise the crystalline olefin polymers such as for instance polypropylene, polypropylene modified with copolymerized ethylene, mixtures of polypropylene with up to 20% by weight of elastomeric ethylene/propylene copolymers containing up to 50% by weight of copolymerized ethylene, elastomeric ethylene-propylene copolymers, polystyrene (crystal and high impact), ABS and polyamide resins.

Preferably a complex b) is used in which the amine R is selected from dicyandiamide, guanamine, melamine and the products of cyclization of dicyandiamide and of condensation of melamine.

Satisfactory results, however, have been obtained also with complexes in which R is guanamine, isophorondiamine, 2-guanidinobenzoimidazole and piperazine.
Examples of promoters of free radicals are 2,3-dimethyl-2,3-diphenyl butane and 2,3-dimethyl-2,3-diphenyl hexane. Said promoters, when present, are used in an amount from 0.1% to about 1% by weight with respect to the total composition.

Organic peroxides can also be used as source of free radicals in the present compositions, preferably in amounts ranging between 0.05 and 0.1 parts by weight.

The complex (b), ground at up to a size of few microns, is also suitable for improving the flame resistance of fibers, raffia and in general of fabrics prepared from polypropylene or other spinnable thermoplastic polymers.

The compositions of the present invention can be prepared according to conventional methods, for instance by mixing the polymer with the additives in a banbury mixer at a temperature equivalent to or exceeding the polymer softening temperature and then by extruding the mixture in an extruder at the most suitable temperature to obtain a product in granules.

The following examples are given to illustrate the invention without any limitative purpose.

### EXAMPLE 1

In a 1-liter glass flask there were introduced 450 g of bismuth tribromide previously mixed with 90 g of dicyandiamide.

The flask was hooked to a rotovapor apparatus, heated in an oil bath at 60° - 70°C and made to rotate at this temperature until the whole substance was melted.

The temperature was then raised up to 130° - 150°C until completion of the reaction, which completion is noticed from the further hardening of the whole substance contained in the flask.

When said hardening was obtained, the product was taken out of the flask and milled to fine powder.

Said product, having empirical formula C₂H₄N₄.BiBr₃ results to be mainly formed of a complex between 1 mole of dicyandiamide and 1 mole of BiBr₃, and has a melting temperature higher than 300°C. In order to endow it with stability towards moisture, the product was then mixed with stearic acid in an amount of 5% by weight in a turbomixer.

In the mixing step stearic acid melts as effect of friction. The product is then cooled and recovered.

### EXAMPLE 2

Operating under the same conditions as in Example 1, 315 g of bismuth trichloride were made to react with 90 g of dicyandiamide.

The product resulted to have empirical formula C₂H₄N₄.BiCl₃ and to be mainly formed of a complex between 1 mole of dicyandiamide with 1 mole of BiCl₃.

Its melting point is 280°C.

### EXAMPLE 3

Operating under the same conditions as in example 1, 360 g of antimony tribromide were made to react with 90 g of dicyandiamide.

The product resulted to have empirical formula C₂H₄N₄.SbBr₃ and to be mainly formed of a complex between 1 mole of dicyandiamide and 1 mole of SbBr₃.

Its melting point is 220°C.

### EXAMPLE 4

Operating under the same conditions of example 1, 450 g of bismuth tribromide were made to react with 130 g of melamine.

The product resulted to have empirical formula C₃H₆N₆.BiBr₃ and to be mainly constituted by a complex between 1 mole of melamine and 1 mole of BiBr₃.

Its melting point is 290°C.

### EXAMPLE 5

In a 2 liters three necked flask, equipped with mechanical stirrer and reflux condenser and immersed in an oil bath heated at 110°C there were introduced 90 g of dicyandiamide maintained in dispersion by strong stirring in 1 liter of xylene.

A solution of 450 g of bismuth tribromide in 300 ml of methanol was then added drop wise. After having stopped the addition, the condenser was removed and the alcohol was removed by distillation. The product obtained was left to cool down, then was filtered and dried at 130°C - 150°C.

The compound resulted to have empirical formula:

C₂H₄N₄.BiBr₃

and to be mainly formed of a complex between 1 mole of dicyandiamide and 1 mole of BiBr₃.

In this case the macroscopic aspect of the product is of a fine powder with small aggregates easily brokenable.

### EXAMPLE 6

In a 2 liters three necked flask equipped with mechanical stirrer and reflux condenser and immersed in an oil bath heated at 110°C there were introduced 250 g of melamine maintained in dispersion by strong stirring in 1 liter of n-heptane. A solution of 450 g of bismuth tribromide in 300 ml of acetone was then added drop by drop.
After having ceased the addition, the condenser was removed and the acetone was eliminated by distillation.

The product obtained was left to cool down, then was filtered and dried at 120°C - 130°C under low pressure and a nitrogen flow.

The product resulted to have the empirical formula:

2C₃H₆N₆.BiBr₃

and to be mainly formed of a complex between 2 mole of melamine and 1 mole of BiBr₃.

Its melting point is 290°C.

In this case the macroscopic aspect of the product is of fine powder with small aggregates easily brokenable.

### EXAMPLE 7

The product obtained according to example 6 was subjected to further thermal treatment in a muffle at 300°C for the time sufficient to have decrease in weight of 10%.

The product obtained has the melting point at about 380°C and shows by the quantitative analysis a decrease in the content of nitrogen and hydrogen.

From the quantitative analysis, the IR analysis and the X ray diffraction the product resuls to have a prevailingly amorphous structure and to present the characteristic absorption bands of "melam", "melem" and "melon".

### Example 8

Using the same procedure as in example 6, 362 g of antimony tribromide are reacted with 125 g of acetoguanamine.

The product has empirical formula

C₄H₇N₅ · SbBr₃

and is predominantly formed of a complex of 1 mole of acetoguanamine with 1 mole of SbBr₃.

### TABLES 1-4

In tables 1-4 there are reported examples of self-extinguishing polymer compositions obtained by employing as additives the complexes of dicyandiamide or melamine prepared according to examples 1-7. The last six tests of table 4 are reported for comparative purposes.

Said compositions were prepared as previously described, using a Dolci extruder with a 20 mm diameter screw, length/diameter ratio of the screw = 23 and screw operating speed = 20 r.p.m., at a temperature of 200° - 240°C.

In order to evaluate the self-extinguishing properties of the compositions, 3 mm-thick test pieces are molded from the granular product by means of a CARVER molding machine, operating at a temperature at least corresponding to the polymer softening temperature, at 40 Kg/cm² pressure for 7 minutes.

The degree of flame resistance is determined on said test pieces by means of the "Oxygen Index" measure (according to ASTM-D2863 specification), which gives the minimum percentage of oxygen in mixture with nitrogen necessary for the sample to burn continuously, as well as by complying with UL-94 specifications (published by Underwriters Laboratories - USA) which provide an evaluation of the extinguishing degree of plastic materials. In applying such specifications, the "Vertical Burning Test" is adopted: it allows to classify the materials at 94 V-0, 94 V-1 and 94 V-2 levels on the basis of the test pieces combustion time and on the basis of the fact that they do or do not drop inflamed particles. According to said method, the test piece is primed, keeping it in vertical position, by approaching the flame to its lower end, performing two ignition attempts, each of them lasting 10 seconds.

Each test is performed on a group of 5 test pieces, also carrying out measurement of the extinction time for 4 subsequent ignitions on the same test piece, as further differentiating criterium.

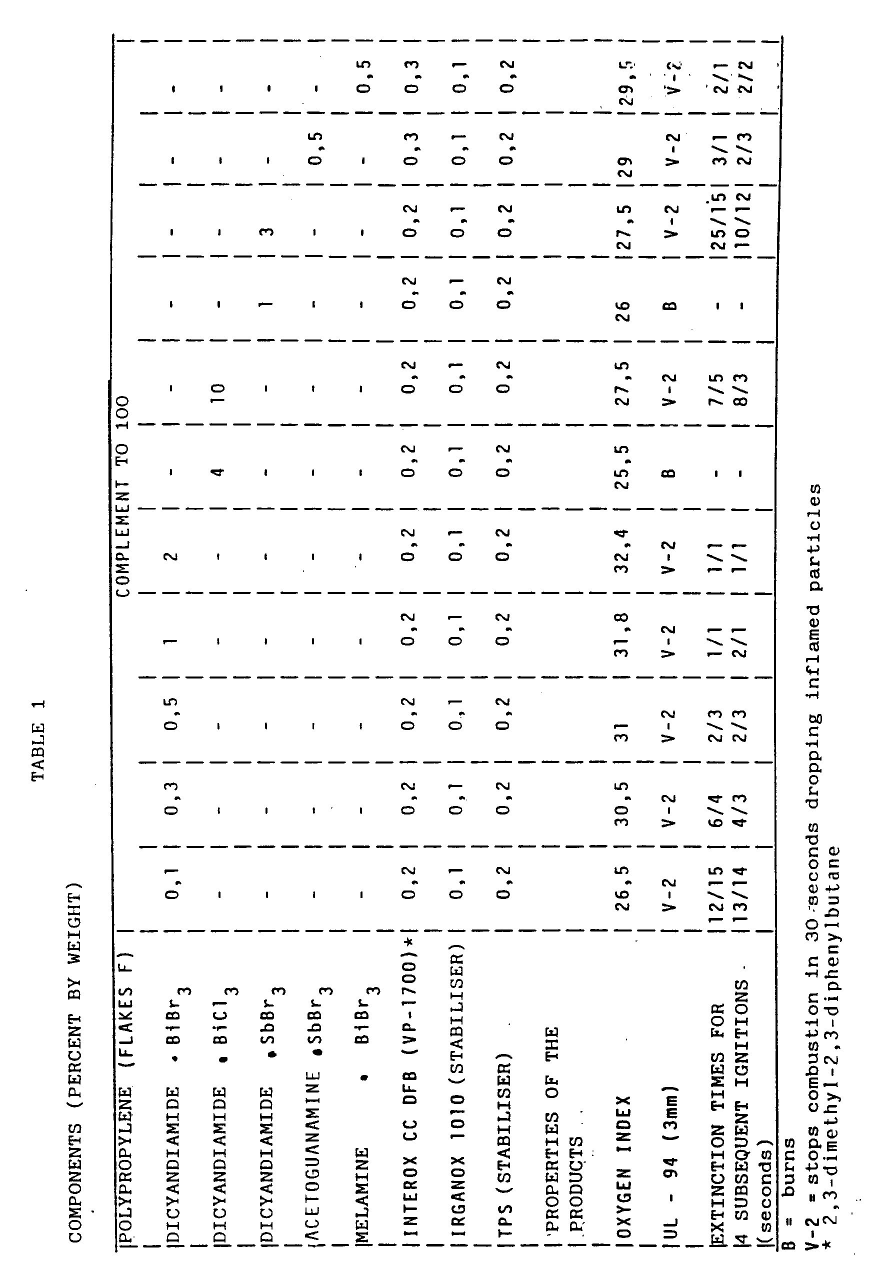

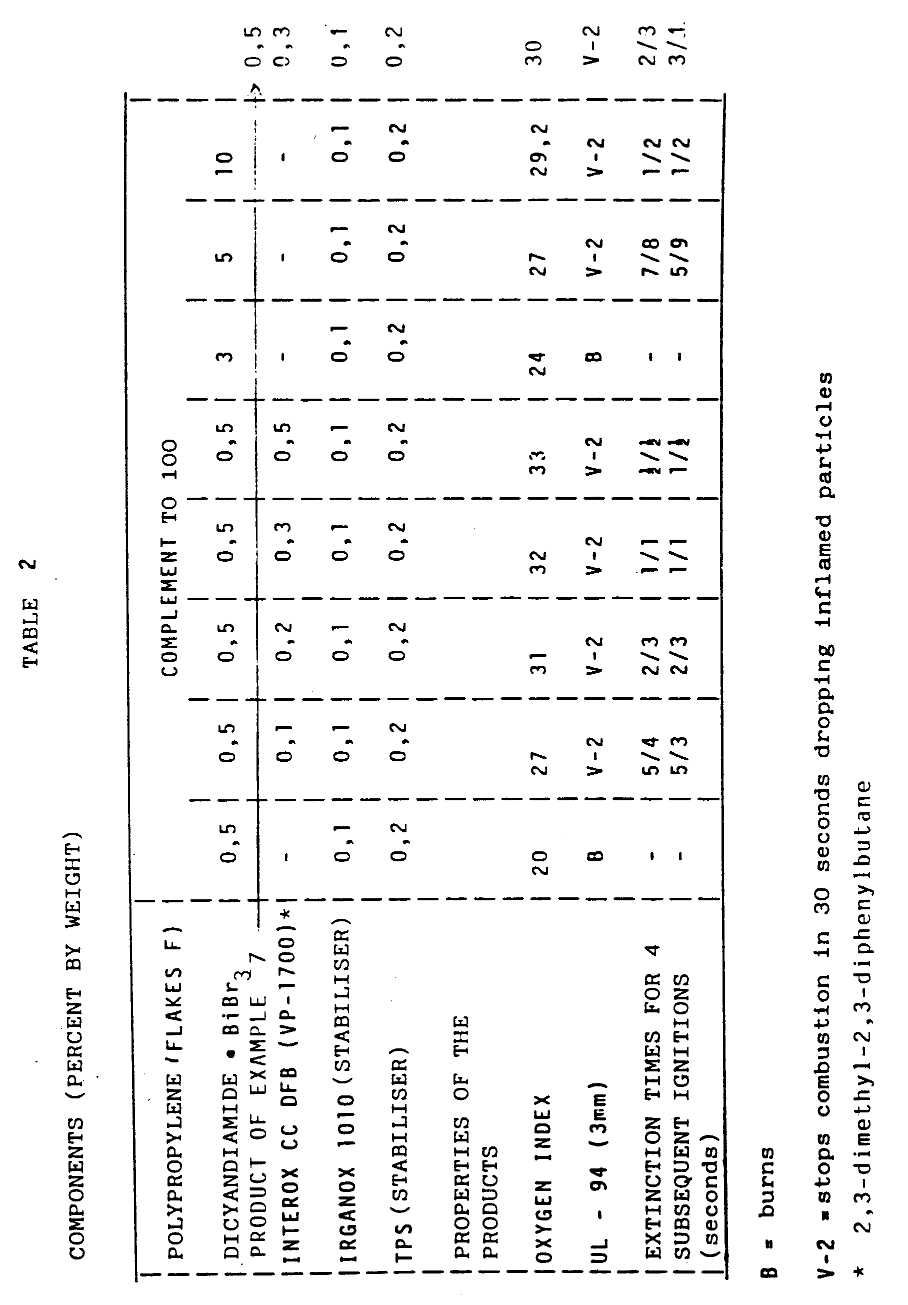

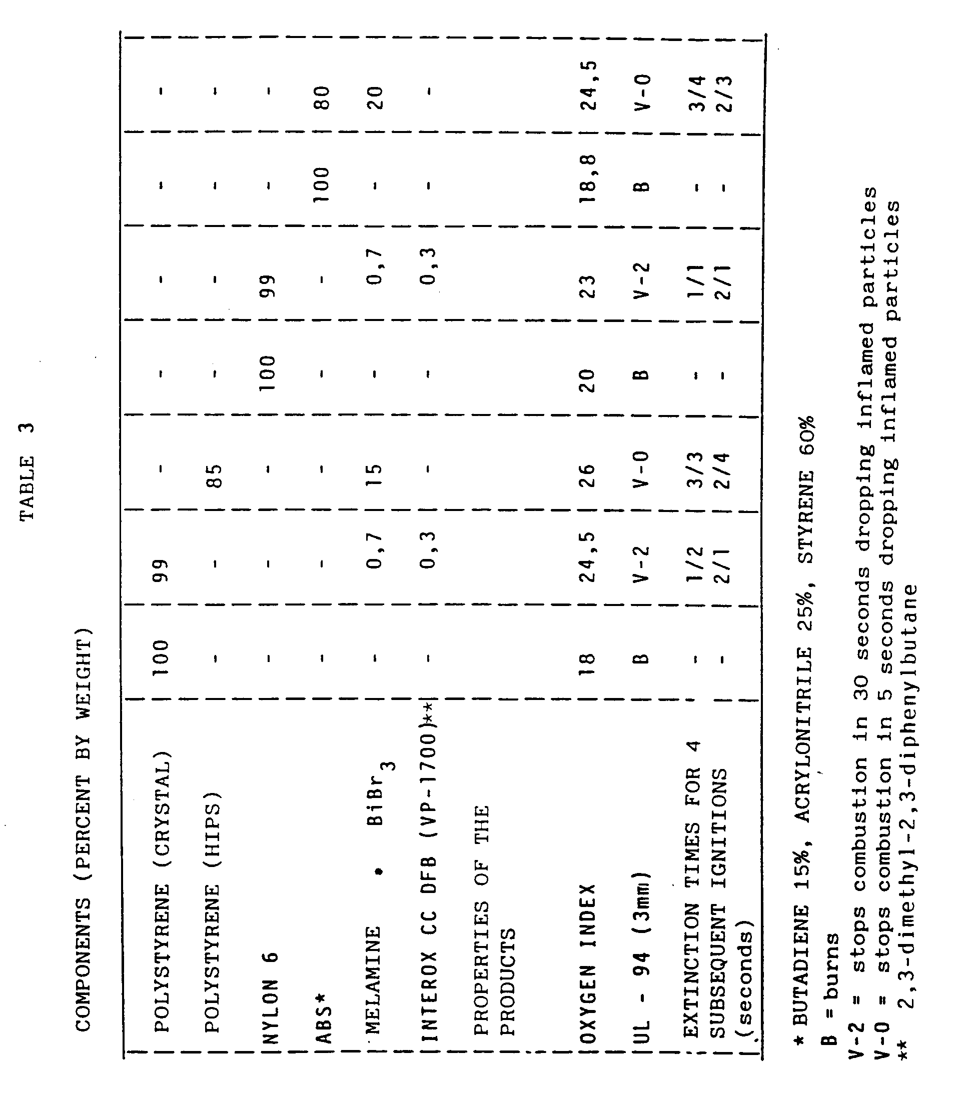

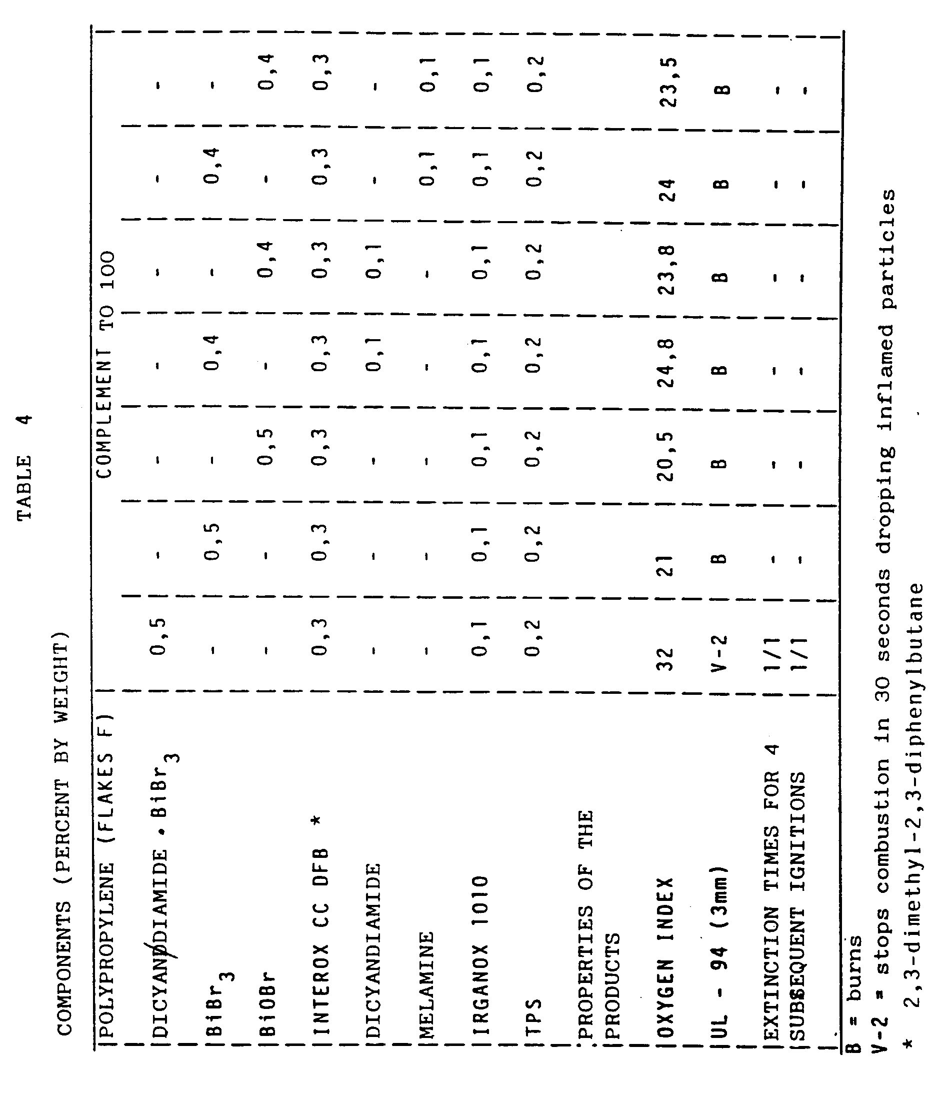

## Claims (Claims for the following Contracting State(s): AT, BE, DE, FR, GB, IT, NL, SE)

1. Complexes of bismuth and antimony halides with amines having formula:
(I) R·(MeX₃)y
where R is an amine selected from the group consisting of 2-guanidinobenzoimidazole, isophorondiamine, dicyandiamide, guanamine, melamine, piperazine, all of which may be optionally substituted with an alkyl, aryl or acyl group, or R is an amine selected from compounds containing from 2 to 9 triazino-rings condensed or linked to each other through one or more -NH - groups;
Me is bismuth or antimony
X is chlorine or bromine
y is a number comprised from 0.3 to 4.

2. Complexes according to claim 1, wherein MeX₃ is Bi tribromide or trichloride and R is selected from dicyandiamide, guanamine, melamine and a compound containing from 2 to 9 triazino-rings condensed or linked to each other through one or more -NH - groups.

3. Complexes according to claim 1 and 2 where y is 1.

4. Process for preparing complexes or mixtures of complexes of bismuth and antimony of the formula R·(MeX₃)y, which process comprises heating a mixture of bismuth or antimony trichloride or tribromide with the amine in amounts of at least 0.3 mole of metal halide per mole of the amine or per mole of primary amino groups when present in the amino compound.

5. Process according to claim 4, wherein the amine is reacted with the solid bismuth or antimony halide at temperatures comprised between 50°C and 300°C.

6. Process according to claim 4 in which a solution or suspension of the amine is reacted at a temperature between 0°C and 100°C and the product is recovered from the reaction medium.

7. Process according to claim 3 in which the amine is dicyandiamide, guanamine or melamine and the complex obtained is thermally treated at temperatures from 100°C to about 300°C.

8. Polymer compositions endowed with flame self-extinguishing properties, comprising by weight:
a) 85 - 99.7% of a thermoplastic polymer
b) 0.3 - 15% of a complex or a mixture of complexes of a bismuth or antimony trihalide with amines, according to any of claims 1 to 3.
c) from 0 to 1% of a promoter of free radical with the proviso that when (c) is 0%, component (b) is present in amounts of at least 3% by weight.

9. Polymer compositions according to claim 8 in which the content of component (b) is comprised between 0.3% and 10% by weight.

10. Polymer compositions according to claim 9 in which the content of the component (b) is comprised between 0.3% and 3% by weight and the content of component (c) is comprised between 0.05% and 0.1% by weight when said component is an organic peroxide, or between 0.1% and 1% by weight when said component is different from peroxides.

11. Polymer compositions according to claim 8 in which component (b) comprises an equimolecular complex between melamine and an antimony or bismuth trihalide.

12. Polymer composition according to claims 8 to 11 wherein the thermoplastic polymer is a crystalline polyolefin and the complex R·(MeX₃)y contains an amine selected from dicyandiamide, melamine and the product of cyclisation of dicyandiamide or of condensation of melamine.

13. Polymer compositions according to claim 12 wherein the crystalline polyolefin is polypropylene.

## Claims (Claims for the following Contracting State(s): ES)

1. Process for preparing complexes or mixtures of complexes of bismuth and antimony halides with amines having formula:
(I) R·(MeX₃)y
where R is an amine selected from the group consisting of 2-guanidinobenzoimidazole, isophorondiamine, dicyandiamide guanamine, melamine, piperazine, all of which may be optionally substituted with an alkyl, aryl or acyl group, or R is an amine selected from compounds containing from 2 to 9 triazino-rings condensed or linked to each other through one or more -NH - groups;
Me is bismuth or antimony
X is chlorine or bromine
y is a number comprised from 0.3 to 4, which
process comprises heating a mixture of bismuth or antimony trichloride or tribromide with the amine in amounts of at least 0.3 mole of metal halide per mole of the amine or per mole of primary amino groups when present in the amino compound.

2. Process according to claim 1, wherein the amine is reacted with the solid bismuth or antimony halide at temperatures comprised between 50°C and 300°C.

3. Process according to claim 1, in which a solution or suspension of the amine is reacted at a temperature between 0°C and 100°C and the product is recovered from the reaction medium.

4. Process according to anyone of claims 1 to 3, in which the amine is dicyandiamide, guanamine or melamine and the complex obtained is thermally treated at temperatures from 100°C to about 300°C.

5. Process according to anyone of claims 1 to 3, wherein MeX₃ is Bi tribromide or trichloride and R is selected from dicyandiamide, guanamine, melamine and a compound containing from 2 to 9 triazino-rings condensed or linked to each other through one or more -NH - groups.

6. Process according to anyone of claims 1 to 5, wherein y is 1.

7. Polymer compositions endowed with flame self-extinguishing properties, comprising by weight:
a) 85 - 99.7% of a thermoplastic polymer
b) 0.3 - 15% of a complex or a mixture of complexes of a bismuth or antimony trihalide with amines, according to anyone of claims 1 to 6.
c) from 0 to 1% of a promoter of free radical with the proviso that when (c) is 0%, component (b) is present in amounts of at least 3% by weight.

8. Polymer compositions according to claim 7 in which the content of component (b) is comprised between 0.3% and 10% by weight.

9. Polymer compositions according to claim 8 in which the content of the component (b) is comprised between 0.3% and 3% by weight and the content of component (c) is comprised between 0.05% and 0.1% by weight when said component is an organic peroxide, or between 0.1% and 1% by weight when said component is different from peroxides.

10. Polymer compositions according to claim 7, in which component (b) comprises an equimolecular complex between melamine and an antimony or bismuth trihalide.

11. Polymer composition according to claims 7 to 10, wherein the thermoplastic polymer is a crystalline polyolefin and the complex R·(MeX₃)y contains an amine selected from dicyandiamide, melamine and the product of cyclisation of dicyandiamide or of condensation of melamine.

12. Polymer compositions according to claim 11, wherein the crystalline polyolefin is polypropylene.

## Patentansprüche (Patentansprüche für folgende(n) Vertragsstaat(en): AT, BE, DE, FR, GB, IT, NL, SE)

1. Komplexe von Wismuth- und Antimonhalogeniden mit Aminen der Formel
(I) R·(MeX₃)_{y}
worin R für ein Amin steht, ausgewählt unter 2-Guanidinobenzoimidazol, Isophorondiamin, Dicyandiamid, Guanamin, Melamin, Piperazin, von denen sämtliche gegebenenfalls mit einer Alkyl-, Aryl- oder Acylgruppe substituiert sein können, oder R für ein Amin steht, ausgewählt unter Verbindungen, die 2 bis 9 Triazinoringe enthalten, welche aneinander kondensiert oder durch eine oder mehrere -NH-Gruppen miteinander verknüpft sind;
Me Wismuth oder Antimon bedeutet;
X Chlor oder Brom bedeutet;
y eine Zahl von 0,3 bis 4 wiedergibt.

2. Komplexe gemäß Anspruch 1, worin MeX₃ Wismuth-tribromid oder -trichlorid ist, und R unter Dicyandiamid, Guanamin, Melamin und einer Verbindung ausgewählt ist, die 2 bis 9 Triazinoringe enthält, welche aneinander kondensiert oder durch eine oder mehrere -NH-Gruppen miteinander verknüpft sind.

3. Komplexe gemäß Anspruch 1 und 2, worin y für 1 steht.

4. Verfahren zur Herstellung von Komplexen oder Mischungen von Komplexen von Wismuth und Antimon der Formel R·(MeX₃)_{y}, bei welchem Verfahren man eine Mischung von Wismuth- oder Antimon-trichlorid oder -tribromid mit dem Amin in Mengen von zumindest 0,3 Mol Metallhalogenid je Mol Amin oder je Mol primärer Aminogruppen, wenn sie in der Aminoverbindung vorliegen, erhitzt.

5. Verfahren gemäß Anspruch 4, worin das Amin mit dem festen Wismuth- oder Antimonhalogenid bei Temperaturen zwischen 50 und 300°C umgesetzt wird.

6. Verfahren gemäß Anspruch 4, bei dem eine Lösung oder Suspension des Amins bei einer Temperatur zwischen 0 und 100°C umgesetzt wird, und das Produkt aus dem Reaktionsmedium gewonnen wird.

7. Verfahren gemäß Anspruch 3, bei dem das Amin Dicyandiamid, Guanamin oder Melamin ist, und der erhaltene Komplex bei Temperaturen von 100 bis etwa 300°C thermisch behandelt wird.

8. Polymerzusammensetzungen mit selbstverlöschenden Eigenschaften, enthaltend, auf das Gewicht bezogen:
a) 85 - 99,7 % eines thermoplastischen Polymeren;
b) 0,3 - 15 % eines Komplexes oder einer Mischung von Komplexen eines Wismuth- oder Antimon-trihalogenids mit Aminen gemäß einem der Ansprüche 1 bis 3;
c) von 0 bis 1 % eines freie Radikale bildenden Promotors mit der Maßgabe, daß, wenn (c) 0 % beträgt, die Komponente (b) in Mengen von zumindest 3 Gew.-% vorhanden ist.

9. Polymerzusammensetzungen gemäß Anspruch 8, worin der Gehalt an Komponente (b) zwischen 0,3 und 10 Gew.-% beträgt.

10. Polymerzusammensetzungen gemäß Anspruch 9, worin der Gehalt an Komponente (b) zwischen 0,3 und 3 Gew.-% und der Gehalt an Komponente (c) zwischen 0,05 und 0,1 Gew.-% beträgt, wenn diese Komponente ein organisches Peroxid ist, oder zwischen 0,1 und 1 Gew.-% beträgt, wenn diese Komponente von Peroxiden verschieden ist.

11. Polymerzusammensetzungen gemäß Anspruch 8, worin die Komponente (b) einen äquimolekularen Komplex zwischen Melamin und einem Antimon- oder Wismuth-trihalogenid umfaßt.

12. Polymerzusammensetzungen gemäß den Ansprüchen 8 bis 11, worin das thermoplastische Polymere ein kristallines Polyolefin ist, und der Komplex R·(MeX₃)_{y} ein Amin, ausgewählt unter Dicyandiamid, Melamin und dem Cyclisierungsprodukt von Dicyandiamid oder dem Kondensationsprodukt von Melamin, enthält.

13. Polymerzusammensetzungen gemäß Anspruch 12, worin das kristalline Polyolefin Polypropylen ist.

## Patentansprüche (Patentansprüche für folgende(n) Vertragsstaat(en): ES)

1. Verfahren zur Herstellung von Komplexen oder Mischungen von Komplexen von Wismuth- und Antimonhalogeniden mit Aminen der Formel
(I) R·(MeX₃)_{y}
worin R für ein Amin steht, ausgewählt unter 2-Guanidinobenzoimidazol, Isophorondiamin, Dicyandiamid, Guanamin, Melamin, Piperazin, von denen alle gegebenenfalls mit einer Alkyl-, Aryl- oder Acylgruppe substituiert sein können, oder R ein Amin ist, ausgewählt unter Verbindungen, die 2 bis 9 Triazinoringe enthalten, welche aneinander kondensiert oder durch eine oder mehrere -NH-Gruppen miteinander verknüpft sind;
Me Wismuth oder Antimon bedeutet;
X für Chlor oder Brom steht;
y eine Zahl von 0,3 bis 4 beträgt, bei welchem
Verfahren man eine Mischung von Wismuth- oder Antimon-trichlorid oder -tribromid mit dem Amin in Mengen von zumindest 0,3 Mol Metallhalogenid je Mol Amin oder je Mol primärer Aminogruppen, wenn sie in der Aminoverbindung vorliegen, erhitzt.

2. Verfahren gemäß Anspruch 1, worin das Amin mit dem festem Wismuth- oder Antimonhalogenid bei Temperaturen zwischen 50 und 300°C umgesetzt wird.

3. Verfahren gemäß Anspruch 1, bei welchem eine Lösung oder Suspension des Amins bei einei Temperatur zwischen 0 und 100°C umgesetzt und das Produkt aus dem Reaktionsmedium gewonnen wird.

4. Verfahren gemäß einem der Ansprüche 1 bis 3, bei dem das Amin Dicyandiamid, Guanamin oder Melamin ist, und der erhaltene Komplex bei Temperaturen von 100 bis etwa 300°C thermisch behandelt wird.

5. Verfahren gemäß einem der Ansprüche 1 bis 3, worin MeX₃ für Bi-tribromid oder -trichlorid steht, und R ausgewählt wird unter Dicyandiamid, Guanamin, Melamin und einer Verbindung, die 2 bis 9 Triazinoringe enthält, welche aneinander kondensiert oder durch eine oder mehrere -NH-Gruppen miteinander verknüpft sind.

6. Verfahren gemäß einem der Ansprüche 1 bis 5, worin y für 1 steht.

7. Polymerzusammensetzungen mit selbstverlöschenden Eigenschaften, enthaltend, auf das Gewicht bezogen:
a) 85 - 99,7 % eines thermoplastischen Polymeren;
b) 0,3 - 15 % eines Komplexes oder einer Mischung von Komplexen von einem Wismuth- oder Antimon-trihalogenid mit Aminen gemäß einem der Ansprüche 1 bis 6;
c) von 0 bis 1 % eines freie Radikale bildenden Promotors mit der Maßgabe, daß, wenn (c) 0 % beträgt, die Komponente (b) in Mengen von zumindest 3 Gew.-% vorhanden ist.

8. Polymerzusammensetzungen gemäß Anspruch 7, worin der Gehalt an Komponente (b) zwischen 0,3 und 10 Gew.-% beträgt.

9. Polymerzusammensetzungen gemäß Anspruch 8, worin der Gehalt an Komponente (b) zwischen 0,3 und 3 Gew.-% beträgt, und der Gehalt an Komponente (c) zwischen 0,05 und 0,1 Gew.-% beträgt, wenn diese Komponente ein organisches Peroxid ist, oder zwischen 0,1 und 1 Gew.-% beträgt, wenn diese Komponente von Peroxiden verschieden ist.

10. Polymerzusammensetzungen gemäß Anspruch 7, worin die Komponente (b) einen äquimolekularen Komplex zwischen Melamin und einem Antimon- oder Wismuth-trihalogenid umfaßt.

11. Polymerzusammensetzungen gemäß den Ansprüchen 7 bis 10, worin das thermoplastische Polymer ein kristallines Polyolefin ist, und der Komplex R·(MeX₃)_{y} ein Amin enthält, ausgewählt unter Dicyandiamid, Melamin und dem Cyclisierungsprodukt von Dicyandiamid oder dem Kondensationsprodukt von Melamin.

12. Polymerzusammensetzungen gemäß Anspruch 11, worin das kristalline Polyolefin Polypropylen ist.

## Revendications (Revendications pour l'(les) Etat(s) contractant(s) suivant(s): AT, BE, DE, FR, GB, IT, NL, SE)

1. Complexes d'halogénures d'antimoine et de bismuth avec des amines présentant la formule:
R.(MeX₃)_{y} (I)
dans laquelle:
R est une amine choisie dans le groupe comprenant: 2-guanidinobenzoimidazole, isophorondiamine, dicyandiamide, guanamine, mélamine, pipérazine, celles-ci pouvant toutes être éventuellement substituées par un radical alkyle, aryle ou acyle, ou R est une amine choisie parmi les composés contenant de 2 à 9 cycles triazino condensés ou reliés entre eux par un ou plusieurs groupes NH;
Me est le bismuth ou l'antimoine;
X est le chlore ou le brome;
y est un nombre compris entre 0,3 et 4.

2. Complexes selon la revendication 1, dans lesquels MeX₃ est le trichlorure ou le tribromure de bismuth et R est choisi dans le groupe comprenant dicyandiamide, guanamine, mélamine et un composé contenant de 2 à 9 cycles triazino condensés ou reliés entre eux par un ou plusieurs groupes NH.

3. Complexes selon la revendication 1 et la revendication 2, dans lesquels y est égal à 1.

4. Procédé de préparation de complexes ou de mélanges de complexes de bismuth et d'antimoine de formule R.(MeX₃)_{Y}, lequel procédé consiste à chauffer un mélange de trichlorure ou de tribromure d'antimoine ou de bismuth avec l'amine en des quantités de l'ordre d'au moins 0,3 mole d'halogénure de métal par mole d'amine ou par mole de groupes amino primaires lorsqu'ils sont présents dans le composé amino.

5. Procédé selon la revendication 4, dans lequel l'amine réagit avec l'halogénure d'antimoine ou de bismuth solide à des températures comprises entre 50°C et 300°C.

6. Procédé selon la revendication 4, dans lequel une solution ou une suspension de l'amine est amenée à réagir à une température comprise entre 0°C et 100°C et le produit est récupéré du milieu réactionnel.

7. Procédé selon la revendication 3, dans lequel l'amine consiste en dicyandiamide, guanamine ou mélamine et le complexe obtenu subit un traitement thermique à une température comprise entre 100°C et environ 300°C.

8. Compositions polymères pourvues de propriétés autoextinctrices, comprenant en poids:
a) 85 à 99,7% d'un polymère thermoplastique;
b) à,3 à 15% d'un complexe ou d'un mélange de complexes de trihalogénure de bismuth ou d'antimoine avec des amines, selon l'une quelconque des revendications 1 à 3;
c) de 0 à 1% d'un promoteur de radicaux libres à condition que, lorsque (c) est 0%, le constituant (b) soit présent en des proportions d'au moins 3% en poids.

9. Compositions polymères selon la revendication 8, dans lesquelles la teneur en constituant (b) est comprise entre 0,3% et 10% en poids.

10. Compositions polymères selon la revendication 9, dans lesquelles la teneur en constituant (b) est comprise entre 0,03% en 3% en poids et la teneur en constituant (c) est comprise entre 0,05% et 0,1% en poids lorsque ledit constituant est un peroxyde organique, ou entre 0,1% et 1% en poids lorsque ledit constituant est autre qu'un peroxyde.

11. Compositions polymères selon la revendication 8, dans lesquelles le constituant (b) comprend un complexe formé en proportion équimoléculaire de mélamine et d'un trihalogénure d'antimoine ou de bismuth.

12. Compositions polymères selon les revendications 8 à 11, dans lesquelles le polymère thermoplastique est une polyoléfine cristalline et le complexe R.(MeX₃)_{y} contient une amine choisie dans le groupe comprenant dicyandiamide, mélamine, et le produit de cyclisation du dicyandiamide ou de condensation de mélamine.

13. Compositions polymères selon la revendication 12, dans lesquelles la polyoléfine cristalline est le polypropylène.

## Revendications (Revendications pour l'(les) Etat(s) contractant(s) suivant(s): ES)

1. Procédé de préparation de complexes ou de mélanges de complexes d'halogénures d'antimoine et de bismuth avec des amines présentant la formule:
R.(MeX₃)_{y} (I)
dans laquelle:
R est une amine choisie dans le groupe comprenant: 2-guanidinobenzoimidazole, isophorondiamine, dicyandiamide, guanamine, mélamine, pipérazine, celles-ci pouvant toutes être éventuellement substituées par un radical alkyle, aryle ou acyle, ou R est une amine choisie parmi les composés contenant de 2 à 9 cycles triazino condensés ou reliés entre eux par un ou plusieurs groupes NH;
Me est le bismuth ou l'antimoine;
X est le chlore ou le brome;
y est un nombre compris entre 0,3 et 4,
lequel procédé consiste à chauffer un mélange de trichlorure ou de tribromure d'antimoine ou de bismuth avec l'amine en des quantités de l'ordre d'au moins 0,3 mole d'halogénure de métal par mole d'amine ou par mole de groupes amino primaires lorsqu'ils sont présents dans le composé amino.

2. Procédé selon la revendication 1, dans lequel l'amine réagit avec l'halogénure d'antimoine ou de bismuth solide à des températures comprises entre 50°C et 300°C.

3. Procédé selon la revendication 1, dans lequel une solution ou une suspension de l'amine est amenée à réagir à une température comprise entre 0°C et 100°C et le produit est récupéré du milieu réactionnel.

4. Procédé selon l'une quelconque des revendications 1 à 3, dans lequel l'amine consiste en dicyandiamide, guanamine ou mélamine et le complexe obtenu subit un traitement thermique à une température comprise entre 100°C et environ 300°C.

5. Procédé selon l'une quelconque des revendications 1 à 3, dans lesquels MeX₃ est le trichlorure ou le tribromure de bismuth et R est choisi dans le groupe comprenant dicyandiamide, guanamine, mélamine et un composé contenant de 2 à 9 cycles triazino condensés ou reliés entre eux par un ou plusieurs groupes NH.

6. Procédé selon l'une quelconque des revendications 1 à 5, dans lesquels y est égal à 1.

7. Compositions polymères pourvues de propriétés autoextinctrices, comprenant en poids:
a) 85 à 99,7% d'un polymère thermoplastique;
b) à,3 à 15% d'un complexe ou d'un mélange de complexes de trihalogénure de bismuth ou d'antimoine avec des amines, selon l'une quelconque des revendications 1 à 6;
c) de 0 à 1% d'un promoteur de radicaux libres à condition que, lorsque (c) est 0%, le constituant (b) soit présent en des proportions d'au moins 3% en poids.

8. Compositions polymères selon la revendication 7, dans lesquelles la teneur en constituant (b) est comprise entre 0,3% et 10% en poids.

9. Compositions polymères selon la revendication 8, dans lesquelles la teneur en constituant (b) est comprise entre 0,3% en 3% en poids et la teneur en constituant (c) est comprise entre 0,05% et 0,1% en poids lorsque ledit constituant est un peroxyde organique, ou entre 0,1% et 1% en poids lorsque ledit constituant est autre qu'un peroxyde.

10. Compositions polymères selon la revendication 7, dans lesquelles le constituant (b) comprend un complexe formé en proportion équimoléculaire de mélamine et d'un trihalogénure d'antimoine ou de bismuth.

11. Compositions polymères selon les revendications 7 à 10, dans lesquelles le polymère thermoplastique est une polyoléfine cristalline et le complexe R.(MeX₃)_{y} contient une amine choisie dans le groupe comprenant dicyandiamide, mélamine, et le produit de cyclisation du dicyandiamide ou de condensation de mélamine.

12. Compositions polymères selon la revendication 11, dans lesquelles la polyoléfine cristalline est le polypropylène.
